# EUROPÄISCHE PATENTANMELDUNG

(11) **EP 0 980 666 A1**
(43) Veröffentlichungstag der Anmeldung: **23.02.2000**
(21) Anmeldenummer: 99116077.1
(22) Anmeldetag: 17.08.1999
(51) Int. Cl.: A47J 39/00

(54) **Kombiniertes Heissluft-Dampf-Gerät**

(30) Priorität: 17.08.1998 DE 29814715 U
(71) Anmelder: Kulbach, Egon, 65549 Limburg (DE)
(72) Erfinder: Die Erfindernennung liegt noch nicht vor
(74) Vertreter: Simon, Peter, Dr.-Jur.

(57) **Zusammenfassung**

Die Erfindung bezieht sich auf ein kombiniertes Heißluft-Dampf-Gargerät, bestehend aus einem Garraum (15), in welchem an der Rückwand ein Luftverwirbelungsrad (5) angebracht ist, diesem axial zugeordnet ein Spindel-Wasserverteiler (4). Auf den Spindel-Wasserverteiler wird durch einen Boiler (1) vorgeheiztes Wasser verbracht, welches durch den Spindelwasserverteiler (4) auf diesem zugeordnete Heizkörper (3) versprüht wird.

## Beschreibung

Die Erfindung bezieht sich auf eine Garvorrichtung der im Oberbegriff des Anspruches näher bezeichneten Art.

Insbesondere im gewerblichen Großküchenbereich werden derzeit geschlossene Gargehäuse zum Garen von Speisen verwendet, die mit Heißluft und/oder Wasserdampf betrieben werden, wobei der Wasserdampf eine besondere Einwirkung auf den Garvorgang nimmt.

Die so eingesetzten Gargeräte erzeugen im Inneren des Gehäuses den Wasserdampf, in dem normales Leitungswasser aus dem öffentlichen Versorgungsnetz durch eine Leitung in das Innere des Gehäuses verbracht wird und dort entweder direkt oder durch eine Versprühvorrichtung auf Heizkörper mit hoher Leistung verteilt wird, wodurch das aufgebrachte Wasser verdampft. Gleichzeitig dienen die betreffenden Heizkörper zum Beheizen des Gargehäuses selbst, wobei in der Regel durch einen Ventilator oder sonstiges Laufrad eine Luftverwirbelung im Inneren des Gargehäuses herbeigeführt wird. Dadurch wird die Hitzewirkung verstärkt und gleichmäßig verteilt.

Die derzeit eingesetzten Geräte der im Oberbegriff bezeichneten Art sind danach durch eine sehr große Heizleistung verbunden mit einem sehr großen Energieverbrauch ausgewiesen, bei entsprechender Vor-Anwärmzeit, um das Gargerät auf Betriebs-Gartemperatur zu bringen. Dies führt insbesondere bei wiederholt kurzzeitigem Einsatz zu vermehrten Aufwärmphasen, die energie- und zeitintensiv sind, ohne das der eigentliche Garvorgang begonnen werden kann.

Der Erfindung liegt die Aufgabe zugrunde, eine Garvorrichtung der im Oberbegriff bezeichneten Art zu schaffen, die durch eine kürzere Auf-/Anwärmphase ausgewiesen ist bei entsprechender Zeit- und Energieersparnis.

Die Aufgabe wird erfindungsgemäß durch die kennzeichnenden Merkmale der Ansprüche 1 bis 3 gelöst.

Die Erfindung beruht auf der Überlegung durch eine Boilervorrichtung das später in den Garraum gelangende Wasser vorzuheizen, um dadurch eine kürzere und effektivere Verdampfungsphase zu erreichen. Da das Wasser, welches später auf den Heizkörper versprüht wird, vorgeheizt wurde, verdampft es in entsprechend kürzerer Zeit, bei entsprechend weniger Energieeinsatz und entsprechend weniger Kühlwirkung im Inneren des Gargehäuses selbst. So entwickelt bei herkömmlichen Geräten das eingesprühte Wasser in den Garraum bei normaler Leitungswassertemperatur einen erheblichen Kühleffekt.

Des weiteren wird der Verdampfungsvorgang im Inneren des Gargehäuses durch Aufsprühen des Wassers auf die Heizkörper optimiert, in dem das Wasser zuvor durch ein Rohr mit Öffnungen auf eine rotierende Spindel als Wasserverteiler verbracht wird, wodurch das Wasser in kleine Partikel zerstäubt wird, und so auf den Heizkörpern einer optimalen Verdampfung zugeführt wird.

Der Spindel-Wasserverteiler ist in der radialen Mitte (Achse) des Luftverwirbelungsrades angebracht, wobei durch die Drehbewegung einerseits und die einzelnen Spindelstäbe eine optimale Versprühung des Wassers auf die zugeordneten Heizkörper erreicht wird.

Die Erfindung wird anhand der Zeichnungen näher erläutert.

Es zeigt:

### Figur 1:

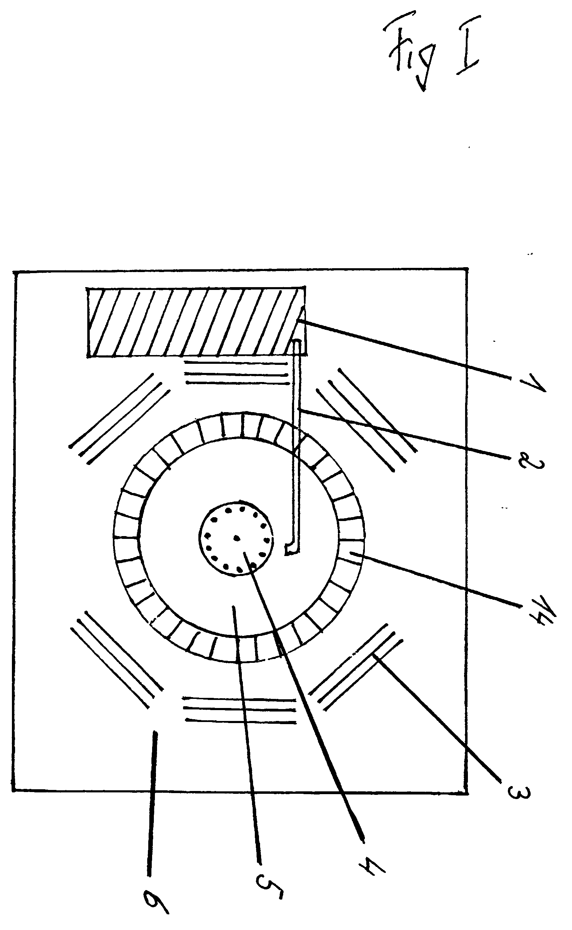

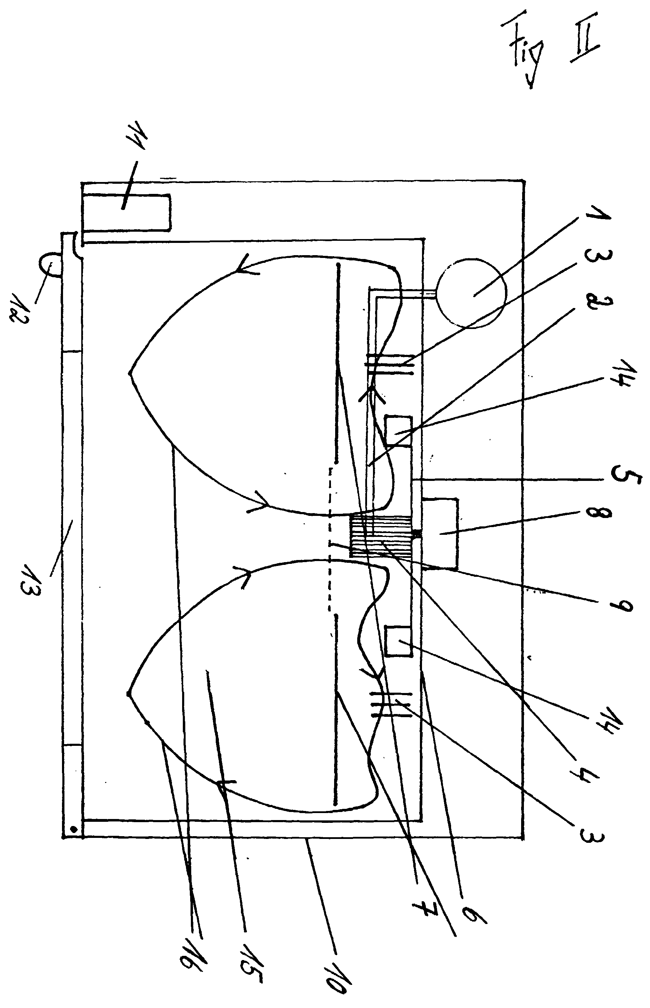

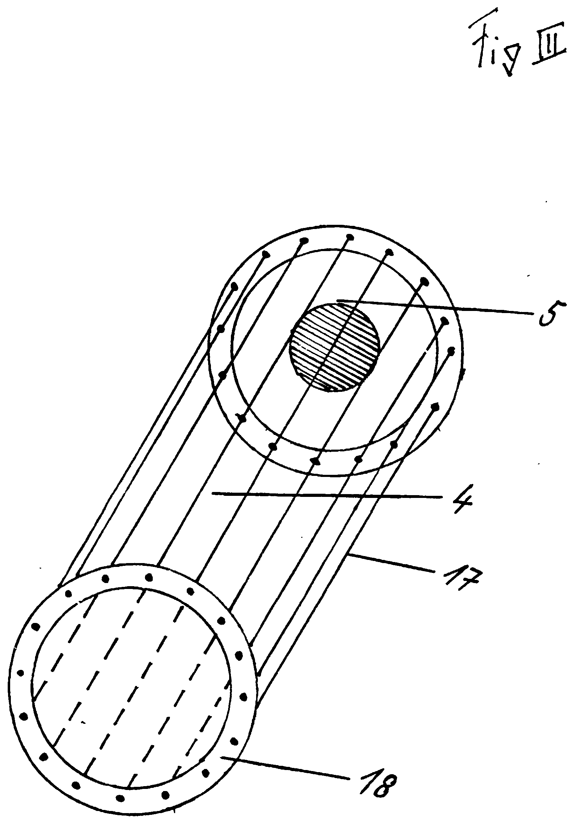

Eine Vorderansicht hinter dem Abdeckblech (7, Figur 2), das Luftverwirbelungsrad (5) mit am äußeren Rand angebrachten Lamellen (14), den Spindel-Wasserverteiler (4) um die Achse des Luftverwirbelungsrades (5) angebracht und den Heizkörpern (3) zugeordnet, die Wasserleitung (2) über welche vorgewärmtes Wasser aus dem Boiler (1) auf den Spindel-Wasserverteiler (4) fließt oder je nach Dosierung tröpfelt, der Boiler (1) ist hinter der Rückwand außerhalb des eigentlichen Garraumes (15, Figur 2) angebracht.

### Figur 2:

Zeigt eine Ansicht von oben nach unten, wobei vor dem Luftverwirbelungrad (5) vor dem Spindel-Wasserverteiler (4) ein Abdeckblech (7) angebracht ist, wobei dieses Abdecklech (7) im Bereich des Luftverwirbelungsrades (5) ein luftdurchlässiges Schutzgitter (9) enthält, wodurch Luft (16) angesaugt wird und an den Seitenteilen des Garraumes (15) wieder in den Garraum gedrückt wird. Dadurch entsteht ein Verwirbelungseffekt, der Boiler (1) ist zwischen dem abschließenen Gehäuse (10) und dem Garraum (15) an der Rückwand angebracht, die Steuerung (11) befindet sich im Vorderteil des Raumes zwischen Garraum (15) und Gehäuse (10), an der Vorderseite ist eine Türe mit Glaseinsatz (13) zwecks Öffnen und Schließen des Garraumes (15) angebracht, und dazu gehörigem Öffnungs-Schließ-Griff (12).

### Figur 3:

Der Spindelwasserverteiler (4) mit den Stäben (17) im vorderen Bereich durch einen Ring (18) gehalten und im hinteren Bereich an das Luftverwirbelungsrad (5) im Axialbereich befestigt.

## Patentansprüche

1. Geschlossene Garvorrichtung mit im Inneren der Garvorrichtung angebrachten Luftverwirbelungsrad, um die Achse des Rades herum angebrachten Spindel-Wasserverteiler und diesem zugeordneten Heizkörpern. Außerhalb des Garraumes angebrachtem Warmwasserboiler verbunden mit einer Wasserleitung zum Inneren des Garraumes dem Spindelwasserverteiler zugeordnet.

2. Anspruch 1 dadurch gekennzeichnet, daß der Warmwasserboiler das Wasser, welches auf den Spindel-Wasserverteiler verbracht wird, vorheizt.

3. Anspruch 1 dadurch gekennzeichnet, daß der Spindel-Wasserverteiler das durch eine Leitung austretende Wasser auf die Spindel zu den Heizkörpern hin verstäubt.
